# EUROPÄISCHE PATENTANMELDUNG

(11) **EP 3 527 510 A1**
(43) Veröffentlichungstag der Anmeldung: **21.08.2019**
(21) Anmeldenummer: 19155370.0
(22) Anmeldetag: 04.02.2019
(51) Int. Cl.: B65G 33/02

(54) **TRENNVORRICHTUNG ZUM TRENNEN VON ÜBERKREUZTEN HAKEN**

(30) Priorität: 15.02.2018 CH 1842018
(71) Anmelder: FERAG AG, 8340 Hinwil (CH)
(72) Erfinder: TANNER, Roland, 8342 Wernetshausen (CH)
(74) Vertreter: Rentsch Partner AG

(57) **Zusammenfassung**

Es wird eine Trennvorrichtung (10) zum Trennen von überkreuzten Haken (21a-b) von Hängefördereinheiten (2a-b) beschrieben, umfassend einen Förderzylinder (1) mit einer Vertiefung, welche einen Wendelgang mit Wendelboden und Wendelflanken zum Fördern der Haken (21a-b) ausbildet, der Förderzylinder (1) umfassend mindestens ein flügelförmiges Trennelement (13), welches sich über einen Teilumfang des Förderzylinders (1) erstreckt und in radialer Richtung von der Mantelfläche des Förderzylinders (1) hervorsteht, wobei das Trennelement (13) durch Rotation des Förderzylinders (1) zwischen zwei auf dem Förderzylinder (1) aufliegende Haken (21a-b) einführbar ist.

## Beschreibung

### GEBIET DER ERFINDUNG

Die vorliegende Erfindung betrifft eine Trennvorrichtung zum Trennen von überkreuzten Haken von Hängefördereinheiten und eine Fördervorrichtung mit einer Trennvorrichtung.

### HINTERGRUND DER ERFINDUNG

In der Intralogistik werden Transportgüter je nach Art und den intralogistischen Anforderungen mit verschiedenen Fördereinheiten und Fördervorrichtungen gefördert. Bei Hängefördervorrichtungen sind dabei Hängefördereinheiten, welche Haken aufweisen und mit diesen in der Hängefördervorrichtung gefördert werden, eine mögliche Wahl zum Fördern der Transportgüter.

Insbesondere in der Bekleidungsindustrie, wie z.B. in Kollektionslagern, Versandlagern oder auch bei chemischen Reinigungen, kommen Hängefördervorrichtungen mit über Haken geförderten Hängefördereinheiten zum Einsatz, wobei die Hängefördereinheiten typischerweise Kleiderbügel sind. Die Haken der Kleiderbügel stellen dabei eine lösbare Kopplung zwischen den Kleiderbügeln und der Hängefördervorrichtung bereit.

In der Regel ist eine Vereinzelung bzw. ein vereinzeltes Fördern einer Mehrzahl von Hängefördereinheiten mit Haken erwünscht, z.B. für Sortiervorgänge. Ein bekanntes Problem stellen dabei überkreuzte Haken dar, welche eine Vereinzelung bzw. ein vereinzeltes Fördern erschweren oder verhindern. Aus dem Stand der Technik sind verschiedene Vorschläge bekannt, um solche überkreuzte Haken zu trennen.

Die DE9217954 U1 beschreibt eine Bügelvereinzelungsvorrichtung, mit der miteinander verhakte Bügel vereinzelt werden können. Die Bügelvereinzelungseinrichtung weist unterhalb einer sich drehenden, geneigten Stange zwei zur Stange parallel angeordnete Führungsschienen auf, die derart auf seitlichem Abstand voneinander angeordnet sind, dass sie einen zur Stange achsparallelen, engen Führungsschlitz direkt unterhalb der Stange bilden. In diesem Schlitz gleiten die Hakenhälse der Bügelhaken, während sich die Bügelarme unterhalb der Führungsschienen befinden und die Bügelhaken auf der Stange sitzen. Die Bügelvereinzelungseinrichtung weist zudem mindestens zwei in Transportrichtung auf bestimmtem Abstand voneinander positionierte, angespitzte, nadelförmige Trennfinger auf, die mit Antriebsmitteln vor- und zurückziehbar gelagert sind. Dem Trennfinger ist noch ein Stopperfinger im Abstand davon nachgeordnet, der ebenfalls vor- und zurückschiebbar angetrieben gelagert ist. Zudem trägt die Stange einen sich radial nach außen erstreckenden Trennmessersteg, der in Transportrichtung kurz hinter dem Trennfinger positioniert ist und dessen Flachebene senkrecht zur Drehachse der Stange ausgerichtet ist. Die Bügel rutschen auf der sich drehenden, geneigten Stange schwerkraftbedingt abwärts, wobei der Bügelhals des vordersten Bügels einer Bügelreihe gegen den vorgeschobenen ersten Trennfinger stößt und die folgenden Bügel aufgestaut werden. Der zweite Trennfinger ist dann zurückgezogen und der Stopperfinger vorgeschoben. Danach wird der erste Finger zurückgezogen und der zweite Finger vorgeschoben, wobei der vorderste Bügelhals gegen den zweiten Trennfinger stösst. Anschließend wird der erste Trennfinger wieder vorgeschoben und schiebt sich hinter den Bügelhals des vordersten Bügels. Der Abstand zwischen den Trennfingern ist derart gering, dass nur ein Bügelhakenhals dazwischen passt. Kurz darauf wird der zweite Trennfinger zurückgezogen und gleichzeitig der Trennmessersteg in die Lücke zwischen den vordersten Bügelhakenhals und den nachfolgenden Bügelhakenhals gedreht. Sind diese Bügelhaken nicht miteinander verhakt, rutscht der vorderste Bügel ohne weiteres gegen den vorgeschobenen Stopperfinger. Sind die Bügelhaken verhakt, treibt bzw. keilt der Trennmessersteg die Bügelhaken auseinander, so dass dann der vorderste Bügel schwerkraftbedingt ungehindert zum Stopperfinger rutschen kann.

Die DE19514604 A1 beschreibt eine Vorrichtung zum Vereinzeln von übereinander verkreuzten Haken eines auf Bügeln oder dergleichen hängend transportierten Fördergutes, wobei die Haken einen sich drehenden, im wesentlichen zylinderförmigen zumindest teilweise hohlen Körper in Form einer Spindel umgreifen und von diesem transportiert werden und der Körper eine radial nach außen weisende, zwischen zwei Haken greifende Vereinzelungseinrichtung aufweist. Die Vereinzelungseinrichtung besteht aus einer Mehrzahl parallel angeordneter Stifte, die im Inneren des Körpers federnd gelagert sind und über Langlöcher aus dem Körper herausragen. Die Stifte sind an einer axial verschiebbar gelagerten, drehbaren Welle innerhalb des hohlen Körpers befestigt. Wobei insbesondere jeder Stift an einer separaten Welle befestigt ist. Zwei mit der Spindel transportierte Bügelhaken gelangen in die Gewindegänge der Spindel, wobei einzelne Bügel ungehindert an den Stiften vorbeitransportiert werden. Über Kreuz hängende Bügel werden durch einen ersten Stift dadurch ergriffen, dass dieser mit der Spitze zwischen die beiden Bügelhaken einfährt und den oberen Haken anhebt und ihn freilegt. Sowie die Bügelhaken vereinzelt sind, laufen sie ungehindert an den nachfolgenden Stiften vorbei. Trifft ein Haken direkt auf eine Spitze eines Stiftes und droht zu verkanten, so gibt der Stift durch die federnde Lagerung seiner Welle dem Druck nach und der Haken rutscht an der Spitze vorbei. Zur Vermeidung von zu starken Schwenkbewegungen des Bügels ist die Spindel von einem Gehäuse umgeben, das im unteren Bereich einen entsprechenden Führungsspalt freilässt. Schwingende Bügel werden dann durch den Spalt beruhigt.

Die DE102016111955 A1 beschreibt eine Bügeltrennvorrichtung zum Trennen von auf einer Trennstange befindlichen Bügeln, die sich überkreuzt haben. Die Bügeltrennvorrichtung umfasst eine Trennstange, eine Vielzahl von im Abstand voneinander angeordneten Trennmessern, die im Wesentlichen auf einer Linie entlang der Längsachse der Trennstange befestigt sind und nach außen weisen, einen Antrieb, der ausgelegt ist, die Trennstange mittels des Antriebs um ihre Längsachse zu drehen, und eine Fördervorrichtung zum Transportieren einer Vielzahl von nebeneinander angeordneten Bügeln. Die Fördervorrichtung umfasst eine im Kreis geführte Mitnehmervorrichtung, welche einen höhenverstellbaren Mitnehmer oder eine Vielzahl nebeneinander angeordneter höhenverstellbarer Mitnehmer aufweist, um einerseits einen sicheren Transport der Vielzahl von Bügeln in der abgesenkten Stellung zu gewährleisten und anderseits in der angehobenen Stellung das Kämmen der Trennmesser während des Trennvorgangs nicht zu behindern. Um die Bügel während des Transportvorgangs sicher zu greifen, weist der Mitnehmer oder die Vielzahl von nebeneinander angeordneten Mitnehmern nebeneinander angeordnete Zähne auf. In einer Förderstellung der Bügeltrennvorrichtung sind die Mitnehmer in einer abgesenkten Stellung und die Trennmesser weisen in das Innere der Bügeltrennvorrichtung nach schräg unten, um zu verhindern, dass die Trennmesser mit den Bügeln wechselwirken. In einer Grundstellung für den Trennvorgang werden die Mitnehmer mittels einer Anhebeleiste nach oben gehoben. Nach Beendigung des Trennvorgangs werden die Mitnehmer mittels einer Absenkleiste wieder auf die Trennstange abgesenkt. Die sich im Kreis drehenden Mitnehmer greifen mit ihren Zähnen zwischen die Haken der Bügel und fördern die Bügel weiter. Das Trennmesser umfasst eine Befestigungsbasis und eine Spitze, die zwischen die Bügel greift.

### DARSTELLUNG DER ERFINDUNG

Bei der Vereinzelung von Haken von Hängefördereinheiten ist es erwünscht, Fehler in der Förderung der Transportgüter zu minimieren und eine möglichst hohe Förderleistung zu gewährleisten. Die Vereinzelung soll daher einerseits möglichst kontrolliert und andererseits möglichst effizient ablaufen.

Es ist daher eine Aufgabe der Erfindung, den Stand der Technik zur Vereinzelung von Haken von Hängefördereinheiten, insbesondere der Trennung von überkreuzten Haken, mindestens zu verbessern.

Diese Aufgabe wird durch die Merkmale des unabhängigen Anspruchs gelöst. Vorteilhafte Ausgestaltungen der Erfindung sind in den abhängigen Ansprüchen und in der vorliegenden Beschreibung und den Figuren gegeben.

Die Erfindung betrifft eine Trennvorrichtung zum Trennen von überkreuzten Haken von Hängefördereinheiten, umfassend einen Förderzylinder mit einer Vertiefung, welche einen Wendelgang mit Wendelboden und Wendelflanken zum Fördern der Haken ausbildet. Der Förderzylinder umfasst mindestens ein flügelförmiges Trennelement, welches sich über einen Teilumfang des Förderzylinders erstreckt und in radialer Richtung von der Mantelfläche des Förderzylinders hervorsteht, wobei das Trennelement durch Rotation des Förderzylinders zwischen zwei auf dem Förderzylinder aufliegende Haken einführbar ist.

Zur Förderung der Hängefördereinheiten liegen die Haken jeweils über einen Auflagepunkt, z.B. am Wendelboden, auf dem Förderzylinder auf. Durch den Förderzylinder mit der einen Wendelgang ausbildenden Vertiefung wird eine kontrollierte Förderung der Hängefördereinheiten ermöglicht. Die Fördergeschwindigkeit kann über die Rotationsgeschwindigkeit des Förderzylinders sowie über die Steigung des Wendelgangs variiert werden.

Bevorzugt werden die Hängefördereinheiten derart vereinzelt mittels dem Förderzylinder gefördert, dass die Haken der Hängefördereinheiten in Förderrichtung einen definierten Abstand zueinander einnehmen, welcher vorzugsweise der Ganghöhe des Wendelgangs entspricht. Beim Fördern mittels dem Förderzylinder kann es jedoch oft vorkommen, dass zwei oder mehr Haken von Hängefördereinheiten überkreuzt auf dem Förderzylinder aufliegen und daher zur Vereinzelung eine Trennung derselben erforderlich ist. Das neue Trennelement bietet den Vorteil einer automatisierten und kontrollierten Trennung von solchen überkreuzten Haken von Hängefördereinheiten.

Durch die flügelartige Form des Trennelements und die Erstreckung über einen Teilumfang des Förderzylinders kann während dem Trennvorgang eine Führung für die Haken bereitgestellt werden, so dass eine kontrollierte Trennung der überkreuzten Haken unterstützt wird. Die Rotation des Förderzylinders muss dabei in der Regel nicht unterbrochen oder geändert werden, da das Trennelement durch die Rotationsbewegung des Förderzylinders zwischen die überkreuzten Haken eingeführt wird und diese mit der weiteren Rotation des Förderzylinders trennt. Die Trennvorrichtung bietet daher den Vorteil, dass die Haken kontinuierlich durch den Förderzylinder mit dem Wendelgang gefördert werden können, wobei der Trennvorgang von überkreuzten Haken ohne grosse Beeinträchtigung oder Unterbrechung der Förderung der Haken ablaufen kann. Die Trennelemente sind vorteilhafterweise derart ausgebildet, dass die Förderung der Haken, insbesondere der nicht überkreuzten Haken, nicht oder nur minimal durch die Trennelemente beeinträchtigt wird, wobei die Trennelemente vorteilhafterweise durch die Form und die Anordnung eine zusätzliche Führung der Haken im Wendelgang ermöglichen.

Die Trennvorrichtung bietet ferner zahlreiche Möglichkeiten zur spezifischen Einstellung des Trennvorgangs durch einfache Anpassung der Geometrie, Anordnung, Anzahl etc. der flügelförmigen Trennelemente unter Gewährleistung einer kontrollierten Trennung der überkreuzten Haken. Insbesondere können unerwünschte Bewegungen der Haken beim Trennvorgang, wie z.B. Schwenkbewegungen, reduziert werden, ohne die Trenneffizienz sowie Förderkapazität zu beeinträchtigen. Durch die Anpassung der Trennelemente kann ausserdem dem unterschiedlichen Verhalten von verschiedenen Hakenformen Rechnung getragen werden.

Eine besonders vorteilhafte Anwendung der Erfindung findet sich in der Bekleidungsindustrie, wo die Hängefördereinheiten Kleiderbügel umfassen, welche mit Haken auf dem Förderzylinder aufliegen. Die Hängefördereinheiten können aber auch Taschen, Behälter, Klammern, Teller, Körbe o.ä. umfassen.

Der Teilumfang, über welchen sich das Trennelement erstreckt, ist in Ausgestaltungen grösser oder gleich ein Achtel, ein Sechstel, ein Viertel oder ein Drittel des Umfangs des Förderzylinders.

In der Regel ist der Teilumfang, über welchen sich das Trennelement erstreckt, kleiner als eine volle Windung des Wendelgangs des Förderzylinders. Durch die Wahl eines bestimmten Teilumfangs, über welchen sich das Trennelement erstreckt, können die Eigenschaften des Trennvorgangs, z.B. die Strecke, welche die überkreuzten Haken während der Trennung entlang den Trennelementen zurücklegen, eingestellt werden.

In einer Ausgestaltung weist das Trennelement eine Neigung in azimutaler Richtung auf.

Vorzugsweise entspricht die azimutale Richtung einer Rotationsrichtung des Förderzylinders. Durch die Neigung des Trennelements in azimutaler Richtung kann das Trennelement einen Teilwendelgang ausbilden. Vorteilhafterweise kann das Trennelement dadurch während des Trennvorgangs Haken in Förderrichtung anstossen bzw. das Fördern der Haken unterstützen. Insbesondere kann der Trennvorgang derart in den Fördervorgang der Haken eingebettet werden, dass abrupte Bewegungsänderungen der Haken reduziert oder verhindert werden können.

In einer Ausgestaltung stimmt die Neigung des Trennelements mit einer Steigung des Wendelgangs beim Trennelement überein.

In einer Ausgestaltung ist die Neigung des Trennelements kleiner oder grösser als eine Steigung des Wendelgangs beim Trennelement.

Im Zusammenhang mit der vorliegenden Erfindung bedeutet "beim Trennelement", dass das betreffende Merkmal des Wendelgangs, wie z.B. die Steigung, an einer Position des Förderzylinders betrachtet wird, welche in der Regel um ein oder zwei volle Windungen vom Trennelement beabstandet ist.

Durch ein Anpassen der Neigung des Trennelements in azimutaler Richtung kann der kontrollierte Trennvorgang verbessert und/oder die Trennwirkung erhöht werden. Bei mehreren Trennelementen können ein oder mehrere der Trennelemente eine mit einer Steigung des Wendelgangs beim Trennelement übereinstimmende Neigung aufweisen und/oder ein oder mehrere Trennelemente eine mit der Steigung des Wendelgangs unterschiedliche Neigung aufweisen. Die Neigungen von mindestens zwei Trennelementen können sich daher in Ausgestaltungen unterscheiden. Das Trennelement bietet den Vorteil der Abstimmbarkeit des Trennvorgangs auf die jeweiligen Bedürfnisse, indem die Neigung in Relation zur Steigung des Wendelgangs variiert wird.

In einer Ausgestaltung ist das Trennelement an einer Wendelflanke angeordnet.

Bei überkreuzten Haken liegt, insbesondere wenn die Breite des Wendelbodens entlang der longitudinalen Achse des Förderzylinders in der Grössenordnung des Durchmessers der Haken ist, häufig einer der Haken aufgrund der Überkreuzung nicht am Wendelboden auf, sondern liegt wenigstens teilweise an einer Wendelflanke an. Ein an einer Wendelflanke angeordnetes Trennelement kann insbesondere in solchen Konfigurationen wirksam zwischen überkreuzten Haken eingreifen und diese voneinander trennen. Ausserdem bietet die Anordnung an einer Wendelflanke den Vorteil, dass für getrennte Haken Platz im Wendelboden besteht, in welchem ein getrennter Haken aufliegen und kontrolliert weitergefördert werden kann. Weiter kann ein an einer Wendelflanke angeordnetes Trennelement das Fördern der Haken besonders unterstützen.

Das Trennelement kann an einer in Bezug auf die Förderrichtung des Förderzylinders vorderen Wendelflanke oder hinteren Wendelflanke angeordnet sein.

In einer Ausgestaltung ist das Trennelement am Wendelboden angeordnet.

Eine Anordnung am Wendelboden kann bei entlang der longitudinalen Achse des Förderzylinders ausreichend breitem Wendelboden den Vorteil bieten, dass das Eingreifen des Trennelements zwischen überkreuzten Haken vereinfacht wird.

In einer Ausgestaltung erstreckt sich das Trennelement vom Wendelboden zu einer Wendelflanke.

Dies kann durch eine sich von der Steigung des Wendelgangs unterscheidende Neigung des Trennelements und einer Erstreckung über einen ausreichenden Teilumfang des Förderzylinders erreicht werden.

Bei Ausgestaltungen mit mehreren Trennelementen können ein oder mehrere Trennelemente an einer Wendelflanke und/oder ein oder mehrere Trennelemente am Wendelboden angeordnet sein und/oder ein oder mehrere Trennelemente sich vom Wendelboden zu einer Wendelflanke erstrecken.

In einer Ausgestaltung weist das Trennelement ein sich in eine azimutale Richtung verjüngendes Profil auf, welche azimutale Richtung vorzugsweise einer Rotationsrichtung des Förderzylinders entspricht.

Bei der Verjüngung in azimutaler Richtung versteht der Fachmann, dass eine Neigung des Trennelements in azimutaler Richtung entsprechend miteinbezogen ist.

Insbesondere kann das Trennelement in Rotationsrichtung spitz zulaufen , was die Einführbarkeit zwischen überkreuzte Haken verbessert. Entgegen der Rotationsrichtung verbreitert sich vorteilhafterweise das Profil, so dass das Trennelement nach Einführen zwischen überkreuzten Haken diese mit zunehmender Drehung des Förderzylinders räumlich separieren kann.

Alternativ oder in Ergänzung weist das Trennelement ein sich in radialer Richtung von der Mantelfläche des Förderzylinders weg verjüngendes Profil auf.

Das Trennelement kann daher in radialer Richtung spitz zulaufen, was die Einführbarkeit zwischen überkreuzte Haken verbessert.

In einer Ausgestaltung weist das Trennelement eine von der Mantelfläche des Förderzylinders aus sich erstreckende, zur Rotationsrichtung des Förderzylinders orientierte, Kante auf, welche einen Winkel mit einer Radialachse des Förderzylinders einschliesst. Dadurch kann das Trennelement eine Spitze ausbilden, welche zwischen zwei Haken einführbar ist.

In einer Ausgestaltung steht das Trennelement mit einer Höhe in radialer Richtung von der Mantelfläche des Förderzylinders hervor, welche über den Teilumfang variiert, wobei vorzugsweise die Höhe des Trennelements in einer azimutalen Richtung abnimmt, welche einer Rotationsrichtung des Förderzylinders entspricht.

Mit einer variierenden Höhe des Trennelements kann der Ablauf des Trennvorgangs ähnlich wie bei den sich verjüngenden Profilen angepasst werden. Zum Beispiel kann eine entgegen der Rotationsrichtung des Förderzylinders zunehmende Höhe des Trennelements bewirken, dass ein kontinuierliches Einführen und zunehmendes räumliches Trennen der überkreuzten Haken ermöglicht wird, so dass abrupte Bewegungen reduziert oder vermieden werden können.

In Ausgestaltungen weist der Förderzylinder mindestens zwei, drei, vier, sechs oder acht Trennelemente auf.

Mehrere aufeinanderfolgende Trennelemente bieten den Vorteil, dass überkreuzte Haken mehrere Trennelemente durchlaufen können und bei nicht erfolgtem Trennen durch ein Trennelement die Trennung durch ein nachfolgendes Trennelement vorgenommen werden kann. Besonders vorteilhaft ist dies bei einer grossen Anzahl von aufeinanderfolgenden überkreuzten Haken. Auch bei mehr als zwei überkreuzten Haken sind mehrere Trennelemente von Vorteil, da z.B. beim ersten Trennelement aus einer Gruppe von überkreuzten Haken ein Haken getrennt werden kann, beim nächsten Trennelement ein weiterer Haken aus der Gruppe getrennt werden kann etc. Auch ist es denkbar, dass bei einem Trennelement eine Gruppe von Haken aufgeteilt wird, und der stromabwärts gelegene Teil der aufgetrennten Gruppe beim darauffolgenden Trennelement weiter aufgetrennt wird. Der stromaufwärts gelegene Teil der Gruppe kann wieder über dasselbe Trennelement laufen und von diesem aufgetrennt werden.

Vorzugsweise sind die Trennelemente entlang der longitudinalen Achse des Förderzylinders versetzt, vorzugsweise um weniger als eine volle Windung des Wendelgangs voneinander beabstandet, angeordnet.

Alternativ oder in Ergänzung können die oder einige der Trennelemente um mehr als eine volle Windung des Wendelgangs voneinander beabstandet angeordnet sein. Zum Beispiel können zunächst einige Trennelemente um weniger als eine volle Windung des Wendelgangs voneinander beabstandet angeordnet sein, damit überkreuzte Haken in kurzer Abfolge diese Trennelemente durchlaufen können. Auf diese Trennelemente folgend können dann um mehr als eine volle Windung beabstandet weitere Trennelemente angeordnet sein, um die restlichen nicht getrennten Haken voneinander zu trennen. Dies kann insofern vorteilhaft sein, als bei den Trennvorgängen, insbesondere bei in kurzer Abfolge ablaufenden Trennvorgängen, Schwenkbewegungen der Haken auftreten können. Diese Schwenkbewegungen können durch einen Abschnitt des Förderzylinders ohne Trennelemente abklingen, so dass eine weitere kontrollierte Trennung von verbleibenden überkreuzten Haken erleichtert wird.

In einer Ausgestaltung sind die Trennelemente azimutal versetzt angeordnet.

Durch die azimutal versetzte Anordnung der Trennelemente kann die Abfolge von aufeinanderfolgenden Trennvorgängen, insbesondere die Abfolge der Einführungen der Trennelemente zwischen überkreuzten Haken, in Bezug auf die Rotation des Förderzylinders abgestimmt werden. Eine optimale azimutale Versetzung der Trennelemente kann ausserdem in Bezug auf auftretende Schwenkbewegungen der Haken gewählt werden.

In bestimmten Ausgestaltungen sind die Trennelemente azimutal um 180°, 120°, 90°, 60° oder um 45° versetzt angeordnet.

In einer Ausgestaltung sind die Trennelemente derart ausgebildet, dass sich mindestens zwei Trennelemente über unterschiedlich grosse Teilumfänge der Mantelfläche des Förderzylinders erstrecken.

Durch die Wahl eines bestimmten Teilumfangs, über welchen sich das Trennelement erstreckt, können die Eigenschaften des Trennvorgangs, z.B. die Strecke, welche die überkreuzten Haken während des Trennvorgangs entlang den Trennelementen zurücklegen, eingestellt werden. Zum Beispiel können aufeinanderfolgende Trennelemente in Förderrichtung sich über zunehmende Teilumfänge der Mantelfläche des Förderzylinders erstrecken, so dass die Strecke, welche die überkreuzten Haken während des Trennvorgangs entlang den Trennelementen zurücklegen, mit den Trennelementen zunimmt. Vorteilhafterweise kann dadurch die Trenneffizienz entlang aufeinanderfolgenden Trennelementen erhöht werden.

Alternativ können die Teilumfänge von aufeinanderfolgenden Trennelementen in Förderrichtung abnehmen. Zum Beispiel kann damit erreicht werden, dass bei einer Gruppe von mehreren überkreuzten Haken beim ersten Trennelement eine erste Haupttrennung erfolgt und die getrennten Teile der Gruppe mit überkreuzten Haken in aufeinanderfolgenden Trennelementen mit kleineren Teilumfängen weiter aufgetrennt werden.

In einer Ausgestaltung unterscheidet sich der Abstand zwischen zwei benachbarten Trennelementen von der Ganghöhe des Wendelgangs im Bereich der Trennelemente.

Zum Beispiel kann dies dadurch erreicht werden, dass ein Trennelement an einer vorderen Wendelflanke in Bezug auf die Förderrichtung und ein benachbartes Trennelement an einer hinteren Wendelflanke angeordnet ist. Es ist auch möglich, dass dies dadurch erreicht wird, dass ein Trennelement am Wendelboden und ein benachbartes Trennelement an einer Wendelflanke angeordnet ist. Ein unterschiedlicher Abstand kann auch durch eine Neigung der Trennelemente, welche sich von der Steigung des Wendelgangs unterscheidet, erreicht werden.

Im Zusammenhang mit der vorliegenden Erfindung bedeutet "im Bereich der Trennelemente", dass das betreffende Merkmal des Wendelgangs, wie z.B. die Ganghöhe, an einer Position des Förderzylinders betrachtet wird, welche in der Regel um ein oder zwei volle Windungen von den betreffenden Trennelementen beabstandet ist.

In einer Ausgestaltung weisen mindestens zwei Trennelemente unterschiedliche Neigungen auf.

In einer Ausgestaltung sind die Trennelemente jeweils an einer Wendelflanke oder am Wendelboden angeordnet, wobei die Anordnung von mindestens zwei Trennelementen unterschiedlich ist.

In einer Ausgestaltung unterscheiden sich die Höhen, mit welchen die Trennelemente in radialer Richtung von der Mantelfläche des Förderzylinders hervorstehen, zwischen mindestens zwei Trennelementen.

In einer Ausgestaltung weist die Trennvorrichtung eine Führungsvorrichtung auf, welche am Förderzylinder derart angeordnet ist, dass die Führungsvorrichtung eine radiale und/oder azimutale Bewegung der Haken beschränkt und die Führungsvorrichtung vorzugsweise ausgebildet ist, die Haken in axialer Richtung anzustossen.

Durch die Führungsvorrichtung kann die kontrollierte Trennung und Förderung der Haken verbessert werden. Unerwünschte Bewegungen wie Schwenk- oder Sprungbewegungen können abgefangen werden. Ein weiterer Vorteil ist, dass Haken, welche von einem Trennelement zurückgestossen wurden, z.B. aufgrund einer missglückten Trennung, oder ein in Bezug auf die Förderrichtung hinterer Haken nach einer erfolgten Trennung, wieder in Richtung des Trennelements angestossen werden können. Die Führungsvorrichtung kann daher insbesondere im Bereich der Trennelemente das Anstossen der Haken in Förderrichtung durch den Wendelgang unterstützen.

Die Führungsvorrichtung ist in einer Ausgestaltung als eine parallel zum Förderzylinder angeordnete Bürstenschnecke ausgebildet, wobei die Bürstenschnecke mit auf dem Förderzylinder aufliegenden Haken in Eingriff bringbar ist.

In einer Ausgestaltung umfasst die Führungsvorrichtung mindestens eine Schiene, welche parallel zum Förderzylinder angeordnet ist. Vorzugsweise umfasst die Führungsvorrichtung zwei parallel zum Förderzylinder angeordnete Schienen, zwischen welchen die Haken führbar sind.

In einer Ausgestaltung ist am Förderzylinder stromabwärts des mindestens einen Trennelements ein Sensor angeordnet, welcher ausgebildet ist, vereinzelte Haken zu detektieren.

Durch den Sensor kann die Trenneffizienz der Trennelemente überwacht werden. Der Sensor ist in Ausgestaltungen als optischer Sensor oder induktiver Sensor ausgebildet.

In einer Ausgestaltung weist der Förderzylinder zwei oder mehrere Wendelgänge auf. Jeder der Wendelgänge kann dabei mindestens ein Trennelement gemäss der vorliegenden Beschreibung aufweisen. Die Wendelgänge können voneinander unterschiedliche Steigungen aufweisen.

Die Erfindung betrifft weiter eine Fördervorrichtung mit einer Trennvorrichtung gemäss der vorliegenden Beschreibung.

Vorzugsweise ist die Fördervorrichtung eine Hängefördervorrichtung.

In einer Ausgestaltung umfasst die Fördervorrichtung eine Steuerung, welche das Trennen der überkreuzten Haken mit der Trennvorrichtung steuert, wobei die Steuerung vorzugsweise mit einem stromabwärts des mindestens einen Trennelements angeordneten Sensor zur Detektion von vereinzelten Haken verbunden ist und die Fördergeschwindigkeit des Förderzylinders in Abhängigkeit der Detektion von Haken durch den Sensor steuert.

Bei einer hohen Trenneffizienz, d.h. wenn der Sensor ausschliesslich vereinzelte Haken oder eine tolerierbare Anzahl nicht vereinzelter Haken detektiert, kann die Steuerung die Fördergeschwindigkeit durch Erhöhung der Rotationsgeschwindigkeit des Förderzylinders erhöhen. Bei einer tiefen Trenneffizienz, d.h. wenn der Sensor zu viele nicht vereinzelte Haken detektiert, kann die Steuerung die Fördergeschwindigkeit entsprechend drosseln.

### LISTE DER FIGUREN

Ausführungsformen der Erfindung werden anhand der nachfolgenden Figuren und der dazugehörigen Beschreibung näher erläutert. Es zeigen:
- Fig. 1: eine Seitenansicht einer Ausführungsform einer Fördervorrichtung mit einer Trennvorrichtung;
- Fig. 2a-b: perspektivische Ansichten eines Ausschnitts der Trennvorrichtung aus Fig. 1;
- Fig. 3a-c: Seitenansichten eines Ausschnitts der Trennvorrichtung aus Fig. 1 mit dem Förderzylinder während eines Trennvorgangs;
- Fig. 4: Schnittansicht der Fördervorrichtung aus Fig. 1;
- Fig. 5: Frontalansicht einer Ausführungsform einer Fördervorrichtung mit einer Führungsvorrichtung;
- Fig. 6: Frontalansicht einer weiteren Ausführungsform einer Fördervorrichtung mit einer Führungsvorrichtung.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

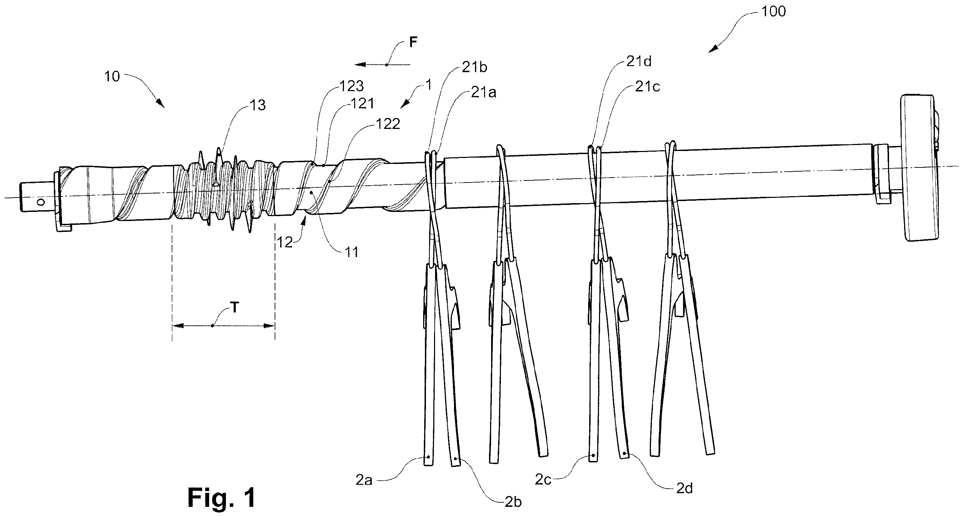

Figur 1 zeigt eine Seitenansicht einer Ausführungsform einer Fördervorrichtung 100 in Form einer Hängefördervorrichtung mit einer Trennvorrichtung 10. Die Trennvorrichtung 10 umfasst einen Förderzylinder 1 mit einer Vertiefung 11, welche einen Wendelgang 12 mit einem Wendelboden 121, einer in Bezug auf die Förderrichtung F hinteren Wendelflanke 122 und einer in Bezug auf die Förderrichtung F vorderen Wendelflanke 123 ausbildet. Durch Rotation des Förderzylinders 1 können im Wendelgang 12 aufliegende Haken in Förderrichtung F gefördert werden. In Figur 1 befinden sich zwei überkreuzte Haken 21a, 21b von Kleiderbügeln 2a, 2b im Wendelgang 12 des Förderzylinders 1. Der besseren Übersicht halber ist der Wendelgang 12 nicht über den ganzen Förderzylinder 1 ausgezeichnet, so dass den Haken 21a, 21b nachfolgend weitere überkreuzte Haken (z.B. Haken 21c, 21d von Kleiderbügeln 2c, 2d) auf einem glatt dargestellten Abschnitt des Förderzylinders 1 aufliegend gezeigt sind. Der Förderzylinder 1 umfasst in einem Trennbereich T flügelförmige Trennelemente 13, welche sich jeweils über einen Teilumfang des Förderzylinders 1 erstrecken und in radialer Richtung von der Mantelfläche des Förderzylinders 1 hervorstehen. Die Steigung des Wendelgangs 12 variiert entlang des Förderzylinders 1, wobei die Steigung des Wendelgangs 12 im Trennbereich T im Vergleich zu den Bereichen davor und danach kleiner ausgebildet ist, um die Fördergeschwindigkeit im Trennbereich abzustimmen und die Neigung und Einführbarkeit der Trennelemente zwischen die Haken zu optimieren. Ebenso ist erkennbar, dass der Wendelboden 121 entlang des Förderzylinders 1 variiert, wobei die Breite des Wendelbodens 121 entlang der longitudinalen Achse des Förderzylinders 1 im Trennbereich T kleiner als im Bereich vor dem Trennbereich T ist. Im Trennbereich T ist die Breite des Wendelbodens 121 in der Grössenordnung der Ausdehnung der Haken 21a-d. Bei den Haken 21a, 21b liegt der Haken 21b des hinteren Kleiderbügels 2b über dem Haken 21a des vorderen Kleiderbügels 2a auf. Bei den Haken 21c, 21d ist die Überkreuzung umgekehrt, d.h. der Haken 21c des vorderen Bügels 2c liegt über dem Haken 21d des hinteren Kleiderbügels 2d auf. Die Trennvorrichtung 10 kann die Haken unabhängig von deren Überkreuzungsreihenfolge trennen.

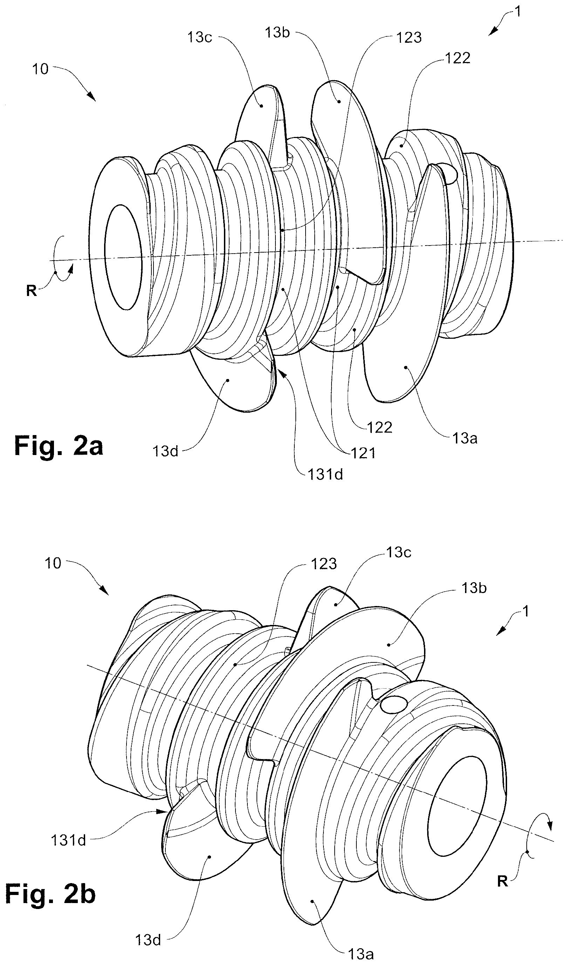

Figur 2a und Figur 2b zeigen verschiedene perspektivische Ansichten eines Ausschnitts der Trennvorrichtung 10 aus Figur 1 im Trennbereich T. Gezeigt sind die flügelförmigen Trennelemente 13a-d, welche sich jeweils über einen Teilumfang des Förderzylinders 1 erstrecken. Wie besonders gut am Trennelement 13c zu sehen ist, weisen die Trennelemente 13a-d einen sich in radialer Richtung von der Mantelfläche des Förderzylinders 1 weg verjüngendes Profil auf. Weiter weisen die Trennelemente 13a-d ein sich in azimutale Richtung verjüngendes Profil auf, welche der Rotationsrichtung R des Förderzylinders 1 entspricht. Beispielhaft ist das beim Trennelement 13d zu sehen, welches eine in Rotationsrichtung R spitz zulaufende Kante 131d aufweist. Die Trennelemente 13a-d weisen eine Neigung in azimutaler Richtung auf und bilden jeweils einen Teilwendelgang aus. Die Trennelemente 13a, 13b sind an der in Bezug auf die Förderrichtung hinteren Wendelflanke 122 angeordnet. Das Trennelement 13c ist am Wendelboden 121 angeordnet. Das Trennelement 13d ist an der in Bezug auf die Förderrichtung vorderen Wendelflanke 123 angeordnet.

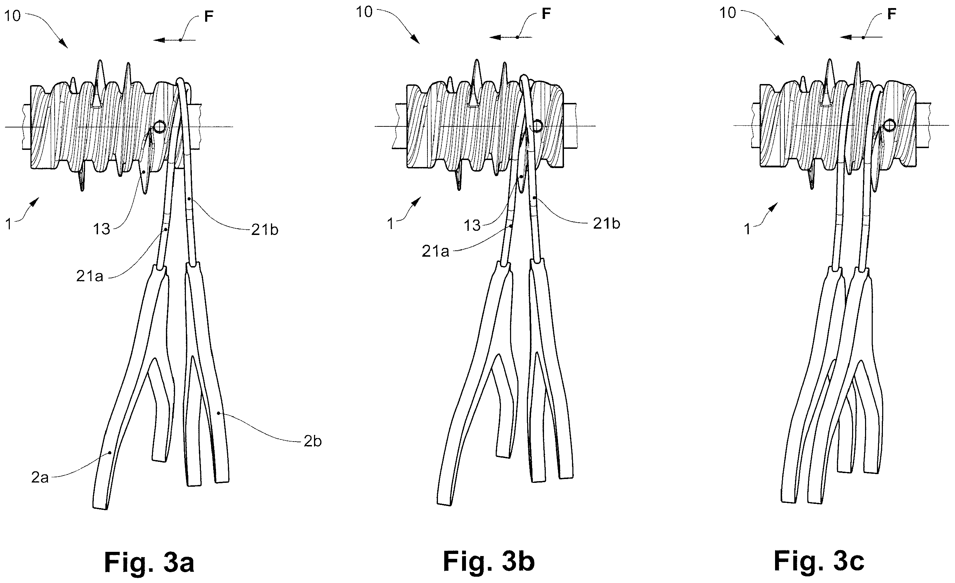

Figuren 3a-3c zeigen Seitenansichten eines Ausschnitts der Trennvorrichtung 10 aus Fig. 1 im Trennbereich T mit dem Förderzylinder 1 während eines Trennvorgangs. In Figur 3a befinden sich die überkreuzten Haken 21a, 21b vor dem Trennelement 13. In Figur 3b hat sich der Förderzylinder 1 derart weitergedreht, dass das Trennelement 13 zwischen die Haken 21a, 21b eingeführt ist. Der Förderzylinder 1 dreht sich schliesslich weiter, bis die Haken 21a, 21b durch das Trennelement 13 getrennt werden und mit dem Förderzylinder 1 in Förderrichtung F vereinzelt weitergefördert werden können. Dies ist in Figur 3c gezeigt.

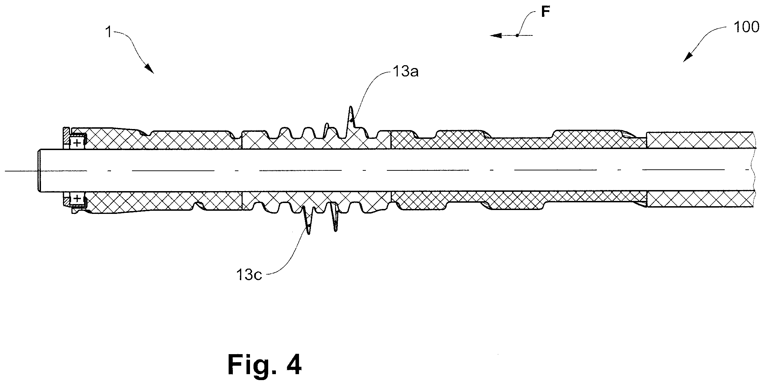

Figur 4 zeigt eine Schnittansicht der Fördervorrichtung 100 aus Figur 1 mit dem Förderzylinder 1. In der Schnittansicht ist ersichtlich, dass das Trennelement 13a an einer in Bezug auf die Förderrichtung F hinteren Wendelflanke angeordnet ist. Das Trennelement 13c ist am Wendelboden angeordnet.

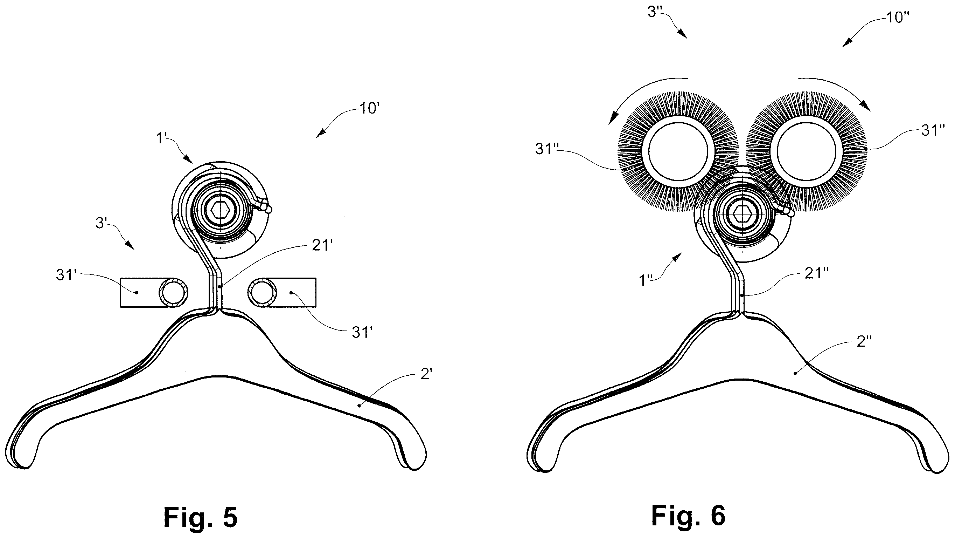

Figur 5 zeigt eine Frontalansicht einer Ausführungsform einer Trennvorrichtung 10' mit einer Führungsvorrichtung 3'. Die Führungsvorrichtung 3' umfasst zwei Schienen 31', welche unterhalb und parallel zum Förderzylinder 1' angeordnet sind. Die Führungsvorrichtung 3' schränkt azimutale Bewegungen der Haken 21' derart ein, dass Schwenkbewegungen der Kleiderbügel 2' reduziert werden können.

Figur 6 zeigt eine Frontalansicht einer weiteren Ausführungsform einer Trennvorrichtung 10" mit einer Führungsvorrichtung 3". Die Führungsvorrichtung 3" umfasst zwei oberhalb und parallel zum Förderzylinder 1" angeordnete Bürstenschnecken 31", welche in Richtung der Pfeile rotierbar sind. Die Bürstenschnecken 31" sind mit den Haken 21" auf dem Förderzylinder 1" in Eingriff bringbar und schränken eine radiale Bewegung der Haken 21" ein. Insbesondere können die Bürstenschnecken 31" ein Rausspringen der Haken 21" aus dem Förderzylinder 1", z.B. aufgrund eines Trennvorgangs, verhindern. Weiter können die Bürstenschnecken 31" durch Eingriff mit den Haken 21" dieselben in Förderrichtung anstossen.

## Patentansprüche

1. Trennvorrichtung (10, 10', 10") zum Trennen von überkreuzten Haken (21a-d, 21', 21") von Hängefördereinheiten (2a-d, 2', 2"), umfassend einen Förderzylinder (1, 1', 1") mit einer Vertiefung (11), welche einen Wendelgang (12) mit Wendelboden (121) und Wendelflanken (122, 123) zum Fördern der Haken (21a-d, 21', 21") ausbildet, der Förderzylinder (1, 1', 1") umfassend mindestens ein flügelförmiges Trennelement (13, 13a-d), welches sich über einen Teilumfang des Förderzylinders (1, 1', 1") erstreckt und in radialer Richtung von der Mantelfläche des Förderzylinders (1, 1', 1") hervorsteht, wobei das Trennelement (13, 13a-d) durch Rotation des Förderzylinders (1, 1', 1") zwischen zwei auf dem Förderzylinder (1, 1', 1") aufliegende Haken (21a-d, 21', 21") einführbar ist.

2. Trennvorrichtung (10, 10', 10") nach Anspruch 1, **dadurch gekennzeichnet, dass** der Teilumfang, über welchen sich das Trennelement (13, 13a-d) erstreckt, grösser oder gleich ein Achtel, ein Sechstel, ein Viertel oder ein Drittel des Umfangs des Förderzylinders (1, 1', 1") ist.

3. Trennvorrichtung (10, 10', 10") nach Anspruch 1 oder 2, **dadurch gekennzeichnet, dass** das Trennelement (13, 13a-d) eine Neigung in azimutaler Richtung aufweist, wobei die Neigung des Trennelements (13, 13a-d) vorzugsweise mit einer Steigung des Wendelgangs (12) beim Trennelement (13, 13a-d) übereinstimmt.

4. Trennvorrichtung (10, 10', 10") nach Anspruch 1 oder 2, **dadurch gekennzeichnet, dass** das Trennelement (13) eine Neigung in azimutaler Richtung aufweist, wobei die Neigung des Trennelements (13) kleiner oder grösser als eine Steigung des Wendelgangs (12) beim Trennelement (13) ist.

5. Trennvorrichtung (10, 10', 10") nach einem der vorangehenden Ansprüche, **dadurch gekennzeichnet, dass** das Trennelement (13, 13a, 13b, 13d) an einer Wendelflanke (122, 123) angeordnet ist, wobei das Trennelement (13, 13a, 13b, 13d) vorzugsweise an einer in Bezug auf die Förderrichtung (F) des Förderzylinders (1, 1', 1") vorderen Wendelflanke (123) oder hinteren Wendelflanke (122) angeordnet ist.

6. Trennvorrichtung (10, 10', 10") nach einem der Ansprüche 1 bis 4, **dadurch gekennzeichnet, dass** das Trennelement (13, 13c) am Wendelboden (121) angeordnet ist.

7. Trennvorrichtung (10, 10', 10") nach einem der vorangehenden Ansprüche, **dadurch gekennzeichnet, dass** das Trennelement (13, 13a-d) ein sich in eine azimutale Richtung verjüngendes Profil aufweist, welche azimutale Richtung vorzugsweise einer Rotationsrichtung (R) des Förderzylinders (1, 1', 1") entspricht.

8. Trennvorrichtung (10, 10', 10") nach einem der vorangehenden Ansprüche, **dadurch gekennzeichnet, dass** das Trennelement (13, 13a-d) ein sich in radialer Richtung von der Mantelfläche des Förderzylinders (1, 1', 1") weg verjüngendes Profil aufweist.

9. Trennvorrichtung (10, 10', 10") nach einem der vorangehenden Ansprüche, **dadurch gekennzeichnet, dass** der Förderzylinder (1, 1', 1") mindestens zwei, drei, vier, sechs oder acht Trennelemente (13, 13a-d) aufweist, wobei die Trennelemente (13, 13a-d) vorzugsweise entlang der longitudinalen Achse des Förderzylinders (1, 1', 1") versetzt, vorzugsweise um weniger als eine volle Windung des Wendelgangs (12) voneinander beabstandet, angeordnet sind.

10. Trennvorrichtung (10, 10', 10") nach Anspruch 9, **dadurch gekennzeichnet, dass** die Trennelemente (13) derart ausgebildet sind, dass sich mindestens zwei Trennelemente (13) über unterschiedlich grosse Teilumfänge der Mantelfläche des Förderzylinders (1, 1', 1") erstrecken.

11. Trennvorrichtung (10, 10', 10") nach Anspruch 9 oder 10, **dadurch gekennzeichnet, dass** sich der Abstand zwischen zwei benachbarten Trennelementen (13, 13a-d) von der Ganghöhe des Wendelgangs (12) im Bereich der Trennelemente (13, 13a-d) unterscheidet.

12. Trennvorrichtung (10', 10") nach einem der vorangehenden Ansprüche, **dadurch gekennzeichnet, dass** die Trennvorrichtung (10', 10") eine Führungsvorrichtung (3', 3") aufweist, welche am Förderzylinder (1', 1") derart angeordnet ist, dass die Führungsvorrichtung (3', 3") eine radiale und/oder azimutale Bewegung der Haken (21', 21") beschränkt und die Führungsvorrichtung (3") vorzugsweise ausgebildet ist, die Haken (21") in axialer Richtung anzustossen.

13. Trennvorrichtung nach einem der vorangehenden Ansprüche, **dadurch gekennzeichnet, dass** am Förderzylinder stromabwärts des mindestens einen Trennelements ein Sensor angeordnet ist, welcher ausgebildet ist, vereinzelte Haken zu detektieren.

14. Fördervorrichtung (100) mit einer Trennvorrichtung (10, 10', 10") nach einem der vorangehenden Ansprüche.

15. Fördervorrichtung nach Anspruch 14, umfassend eine Steuerung, welche das Trennen der überkreuzten Haken mit der Trennvorrichtung steuert, wobei die Steuerung vorzugsweise mit einem stromabwärts des mindestens einen Trennelements angeordneten Sensor zur Detektion von vereinzelten Haken verbunden ist und die Fördergeschwindigkeit des Förderzylinders in Abhängigkeit der Detektion von Haken durch den Sensor steuert.
